# EUROPEAN PATENT APPLICATION

(11) **EP 4 506 099 A1**
(43) Date of publication of application: **12.02.2025**
(21) Application number: 23792857.7
(22) Date of filing: 21.06.2023
(51) Int. Cl.: B23K 26/142, B23K 26/70, B08B 15/04, B23K 26/16

(54) **DUST EXTRACTION DEVICE AND BATTERY PRODUCTION LINE**

(71) Applicant: Contemporary Amperex Technology (Hong Kong) Limited, Central, Central And Western District (HK)
(72) Inventor: LIU, Yuwen, Fujian 352100 (CN); SONG, Genli, Fujian 352100 (CN); WANG, Wenchong, Fujian 352100 (CN)
(74) Representative: Laufhütte, Dieter
(86) International application number: PCT/CN2023/101896
(87) International publication number: WO 2024/259673

(57) **Abstract**

This application provides a dust extraction apparatus (1000) and a battery production line (10). A copper nozzle (100) is disposed on a first end face (210) of a cover plate (200), and a channel (101) of the copper nozzle (100) communicates with a through hole (201) of the cover plate (200). A dust extraction assembly (300) is disposed on a second end face (220), and a cavity (301) having a first port (302) and a second port (303) is formed in the interior of the dust extraction assembly (300). The first port (302) faces the through hole (201), and a suction apparatus (500) is connected to the second port (303). The dust extraction apparatus (1000) in embodiments of this application can extract dust via the first port (302) of the dust extraction assembly (300) facing the through hole (201), thus promptly exhausting impurities such as smoke and welding slag generated during welding.

## Description

### TECHNICAL FIELD

This application relates to the field of welding technologies, and in particular, to a dust extraction apparatus and a battery production line.

### BACKGROUND

Widely used in fields such as machinery and electronics, welding technology is a manufacturing process that joins metal weldments by heating, high temperature, or high pressure.

During production of batteries, the poles of battery cells usually need to be welded to conductive connection pieces. During welding, smoke, welding slag, and the like are generated. If the smoke, welding slag, and the like generated during welding are not promptly removed, they can have an impact on the welding operation, potentially leading to issues such as poor welding.

### SUMMARY

An objective of embodiments of this application is to provide a dust extraction apparatus and a battery production line, aiming to alleviate technical issues such as smoke and welding slag caused during welding affecting the welding effect.

The technical solutions used in the embodiments of this application are as follows:
According to a first aspect, the embodiments of this application provide a dust extraction apparatus, including a copper nozzle, a cover plate, a dust extraction assembly, and a suction apparatus. The copper nozzle is configured to abut against a welding region of a to-be-welded object, where the copper nozzle has a penetrating channel. The cover plate is provided with a through hole, where the cover plate has a first end face and a second end face opposite each other, the copper nozzle is disposed on the first end face, and the channel communicates with the through hole. The dust extraction assembly is disposed on the second end face, where a cavity having a first port and a second port is formed in the interior of the dust extraction assembly, the first port facing the through hole. The suction apparatus is connected to the second port.

The foregoing technical solution in the embodiments of this application has at least the following technical effects or advantages:
In the dust extraction apparatus provided in the embodiments of this application, as the copper nozzle is disposed on the first end face of the cover plate and the dust extraction assembly is disposed on the second end face of the cover plate, the copper nozzle tightly presses the to-be-welded object and exposes the welding region of the to-be-welded object, and the smoke, welding slag, and the like generated during welding splash in the channel of the copper nozzle, or penetrate through the channel and splash to the second end face of the cover plate. The suction apparatus can create negative pressure in the cavity of the dust extraction assembly via the second port, and then the dust extraction assembly on the second end face can adsorb the impurities such as smoke and welding slag in the copper nozzle or on the second end face via the first port. This can promptly exhaust impurities such as smoke and welding slag, thus reducing impurities such as smoke and welding slag remaining on the copper nozzle and the second end face, reducing the impact of the impurities such as smoke and welding slag on the welding effect.

In some embodiments, the dust extraction assembly includes a dust-extraction tube body and a sealing cover, where the dust-extraction tube body is disposed on the second end face, the cavity is formed in the interior of the dust-extraction tube body, the dust-extraction tube body is provided with an opening and the second port, the sealing cover is disposed on the dust-extraction tube body, and the sealing cover is configured to seal part of the opening so as to form the first port.

With the foregoing technical solution used, the dust-extraction tube body is disposed on the second end face and the sealing cover is disposed on the dust-extraction tube body and sealing part of the opening, allowing the other part of the opening to be exposed externally and to form the first port for absorbing impurities such as smoke and welding slag. The suction apparatus can create negative pressure in the cavity of the dust-extraction tube body via the second port, thus extracting dust in the through hole via the first port.

In some embodiments, one of the dust-extraction tube body and the sealing cover is provided with an adjustment structure, and the other one of the dust-extraction tube body and the sealing cover is provided with a connection structure, the connection structure being configured to be able to connect to any part of the adjustment structure.

With the foregoing solution used, the connection structure being connected to the adjustment structure helps to assemble the sealing cover on the dust-extraction tube body. In addition, changing the position of the connection structure connected to the adjustment structure can change the area of the sealing cover blocking the opening, adjusting the area of the first port, thus improving the dust extraction effect by adjusting the suction volume of the first port.

In some embodiments, the adjustment structure is a waist-shaped hole, and the connection structure is a mounting hole.

With the foregoing solution used, the mounting hole can be aligned with any part of the waist-shaped hole, and the sealing cover is assembled on the dust-extraction tube body using a fastener, thus mounting the sealing cover and adjusting the position.

In some embodiments, the cover plate is provided with a chamfer at a connection position between the through hole and the second end face.

With the foregoing solution used, the suction apparatus connected to the second port creates negative pressure in the cavity of the dust extraction assembly, and as provided at the connection position between the second end face and the through hole, the chamfer can avoid the airflow caused due to the negative pressure in the cavity from the inside of the copper nozzle to the first port, improving the flow velocity and rate of the airflow, thus effectively improving the dust extraction effect in the channel of the copper nozzle.

In some embodiments, the cover plate is provided with a plurality of such through holes, the copper nozzle is provided in plurality, the plurality of copper nozzles are disposed on the first end face and respectively communicate with corresponding through holes; and a plurality of such cavities are formed in the interior of the dust extraction assembly, and the first ports of the cavities respectively face the corresponding through holes.

With the foregoing solution used, as the cover plate is also provided with a plurality of through holes in response to the plurality of copper nozzles, the plurality of copper nozzles can communicate with the corresponding through holes. In addition, the plurality of cavities being formed in the interior of the dust extraction assembly, with the first port of each cavity facing a through hole, allows one first port to face a corresponding through hole during welding in any copper nozzle, such that the dust extraction assembly extracts dust from the copper nozzle in communication with the through hole via the first port.

In some embodiments, the dust extraction assembly is provided with a plurality of such first ports, and each of the cavities communicates with at least one of the first ports.

With the foregoing solution used, each cavity of the dust extraction assembly can communicate with one or more first ports. That is, dust in one or more through holes can be extracted into each cavity via one or more first ports.

In some embodiments, the copper nozzle includes a copper nozzle body and a mounting portion, where the copper nozzle body is provided with the channel, the mounting portion is connected to the copper nozzle body, and the mounting portion is disposed on the first end face.

With the foregoing solution used, the copper nozzle body can be mounted on the first end face via the mounting portion, such that the channel of the copper nozzle body communicates with the through hole. This allows for more stable connection between the copper nozzle body and the first end face and a small jamming probability of the copper nozzle body, thus improving the welding effect.

In some embodiments, the dust extraction apparatus further includes a control assembly, the control assembly is disposed on the cover plate, and the control assembly is configured to be able to control unblocking/blocking of the second port.

With the foregoing solution used, the control assembly can control the unblocking/blocking of the second port. When the dust extraction assembly has a plurality of cavities, the control assembly can be used to unblock the second port of the cavity required for dust extraction and to block the second port of the cavity required for no dust extraction, so as to adjust the increase in negative pressure of the cavity required for dust extraction, thus improving the dust extraction effect of the corresponding first port.

In some embodiments, the control assembly includes a blocking member and a drive member, where an output end of the drive member is connected to the blocking member, and the drive member is configured to drive the blocking member to move, so as to unblock or block the second port.

With the foregoing solution used, the drive member is used to drive the blocking member to move, such that the blocking member can move to block the second port or move to unblock the second port, so as to control the unblocking/blocking the second port.

In some embodiments, the control assembly further includes a connection member, where the connection member is provided with a connection hole and an insertion slot, the connection hole communicates with the second port, the second port communicates with the suction apparatus via the connection hole, and the insertion slot intersects the connection hole; and the blocking member is a flipper, and the drive member is configured to drive the flipper to move until the flipper is inserted into the insertion slot and blocks the connection hole.

With the foregoing solution used, the drive member can drive the flipper to block the connection hole, such that the flipper blocks the second port from the suction apparatus at the connection hole, thus blocking the second port. According to a second aspect, the embodiments of this application further provide a battery production line including the foregoing dust extraction apparatus.

The foregoing technical solution in the embodiments of this application has at least the following technical effects or advantages:

As the battery production line provided in the embodiments of this application includes the foregoing dust extraction apparatus, on the basis that the dust extraction apparatus can promptly exhaust impurities such as smoke and welding slag to reduce their impact on the welding effect, the products processed and assembled on the battery production line show better quality.

### BRIEF DESCRIPTION OF DRAWINGS

To describe the technical solutions in the embodiments of this application more clearly, the following briefly describes the accompanying drawings required for describing the embodiments and the related art. Apparently, the accompanying drawings in the following description show only some embodiments of this application, and persons of ordinary skill in the art may still derive other drawings from these accompanying drawings without creative efforts.
FIG. 1 is a schematic structural diagram of a dust extraction apparatus being applied to a battery production line according to some embodiments of this application;
FIG. 2 is a schematic diagram of a connection structure between a cover plate and a dust extraction assembly according to some embodiments of this application;
FIG. 3 is a schematic diagram of a locally enlarged view of part A in FIG. 2;
FIG. 4 is a schematic diagram of a connection structure between a cover plate and a copper nozzle according to some embodiments of this application;
FIG. 5 is a schematic diagram of a partial structure of a dust extraction assembly according to some embodiments of this application;
FIG. 6 is a schematic diagram of a connection structure between a dust-extraction tube body and a sealing cover according to some embodiments of this application;
FIG. 7 is a schematic diagram of an internal structure of a dust-extraction tube body according to some embodiments of this application;
FIG. 8 is a schematic structural diagram of a copper nozzle according to some embodiments of this application;
FIG. 9 is a schematic structural diagram of a control assembly according to some embodiments of this application; and
FIG. 10 is a schematic structural diagram of a connection member according to some embodiments of this application.

Reference signs are described as follows:
10. battery production line;
1000. dust extraction apparatus; 2000. to-be-welded object;
100. copper nozzle; 101. channel; 110. copper nozzle body; 120. mounting portion;
200. cover plate; 201. through hole; 210. first end face; 220. second end face; 230. chamfer;
300. dust extraction assembly; 301. cavity; 302. first port; 303. second port; 310. dust-extraction tube body; 311. opening; 312. connection structure; 320. sealing cover; 321. adjustment structure;
400. control assembly; 410. blocking member; 420. drive member; 430. connection member; 4301. joint base; 4302. joint tube; 431. connection hole; and 432. insertion slot; and
500. suction apparatus.

### DETAILED DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the drawings are illustrative and merely for explaining this application. They should not be construed as limitations on this application.

Unless otherwise defined, meanings of all technical and scientific terms used in this specification are the same as those commonly understood by persons skilled in the art of this application. The terms used in this specification of this application are merely intended to describe specific embodiments, but not to limit this application. The terms "include", "provided with", and any variants thereof in the descriptions of the specification, claims, and accompanying drawings of this application are intended to cover a non-exclusive inclusion.

In the description of the embodiments of this application, orientations or positional relationships indicated by the terms "length", "width", "thickness", "inside", "outside", "above", "below", "left", "right", and the like are based on the orientations or positional relationships shown in the accompanying drawings, and are merely for the convenience of describing this application and simplifying the description, rather than indicating or implying that the devices or elements must have a particular orientation, and constructed and operated in the particular orientation. Thus, it cannot be construed as a limitation to this application.

In addition, the terms "first", "second", and the like are merely for the purpose of distinguishing descriptions, and shall not be understood as any indication or implication of relative importance or any implicit indication of the number of technical features indicated. For example, a first guide member and a second guide member are used solely for distinguishing different guide members of which orders are not limited. The first guide member may also be named the second guide member, and vice versa, without deviating from the scope of various described embodiments. Furthermore, the terms "first", "second", and the like do not necessarily imply that the indicated features are different.

In the description of the embodiments of this application, unless otherwise specified and defined explicitly, the terms "connect" and "join" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations. "A plurality of" means at least two, that is, two or more.

The term "and/or" in this application is only an associative relationship for describing associated objects, indicating that three relationships may be present. For example, A and/or B may indicate three cases: presence of only A; presence of both A and B; and presence of only B. In addition, a character "/" in this specification generally indicates an "or" relationship between contextually associated objects.

It should be noted that in this application, terms such as "in some embodiments", "exemplary", "for example", are used to indicate examples, illustrations, or explanations. Any embodiments or design schemes described as "in some embodiments", "exemplary", "for example", or similar terms in this application should not be interpreted as being more preferred or advantageous than other embodiments or design schemes. Specifically, the use of terms such as "in some embodiments", "exemplary", "for example", is intended to present relevant concepts in a concrete manner, indicating that specific features, structures, or characteristics described in conjunction with the embodiments can be included in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

To make the objectives, technical solutions, and advantages of this application more comprehensible, the following describes this application in detail with reference to embodiments and accompanying drawings.

As the market demand for batteries continues to expand, the production and usage of battery products are also increasing. During the production and assembly of batteries, the battery poles usually need to be welded to the conductive connection piece. Welding is a manufacturing process that joins metal weldments by heating, high temperature, or high pressure. During welding, smoke, welding slag, and the like are generated. If the impurities such as smoke and welding slag generated during welding are not promptly removed, they accumulate around the vicinity of the welding points, impacting the welding operation at the welding points, potentially leading to issues such as poor welding and welding seam collapse that affect the welding effect.

Given the foregoing consideration, in order to resolve the technical problem that the impurities such as smoke and welding slag generated during welding, if not exhausted promptly, may affect the welding effect, a dust extraction apparatus is designed. A cover plate is provided, a dust extraction assembly is disposed on a second end face of the cover plate and the first port faces the through hole, and a copper nozzle is disposed on a first end face of the cover plate and communicates with the through hole of the cover plate. The cover plate can be disposed around the vicinity of the welding position, and the copper nozzle abuts against a welding region of a to-be-welded object. Because the smoke, welding slag, and the like generated during welding accumulate in the channel of the copper nozzle, or penetrate through the channel of the copper nozzle and splash to a second end face, the suction apparatus can create negative pressure in the cavity of the dust extraction assembly via a second port, such that the first port in communication with the cavity can face the direction of the through hole for dust extraction operation, allowing impurities such as smoke and welding slag generated during welding to be promptly exhausted. This reduces the impact of the impurities such as smoke and welding slag on the welding operation, thus improving the welding effect.

The dust extraction apparatus disclosed in the embodiments of this application can be used for dust extraction during welding of poles and conductive connection pieces in the process of battery production. The dust extraction apparatus may be further used for dust extraction during welding of other components.

For ease of description, the following embodiments are described with an example in which a dust extraction apparatus is used in the welding process on a battery production line.

The following describes the dust extraction apparatus provided in the embodiments of this application.

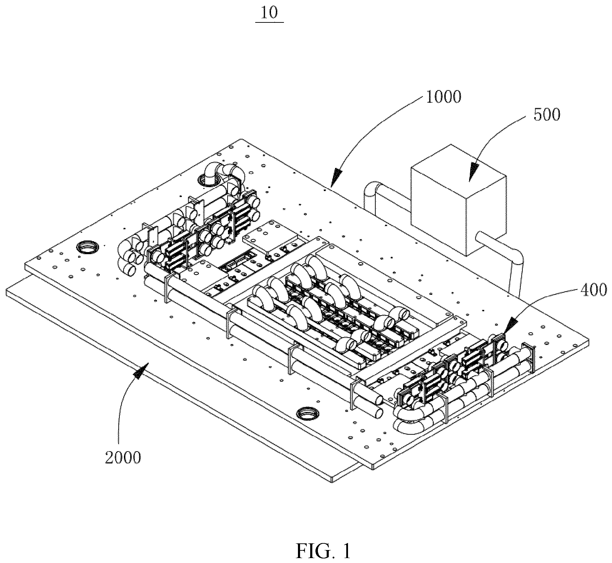

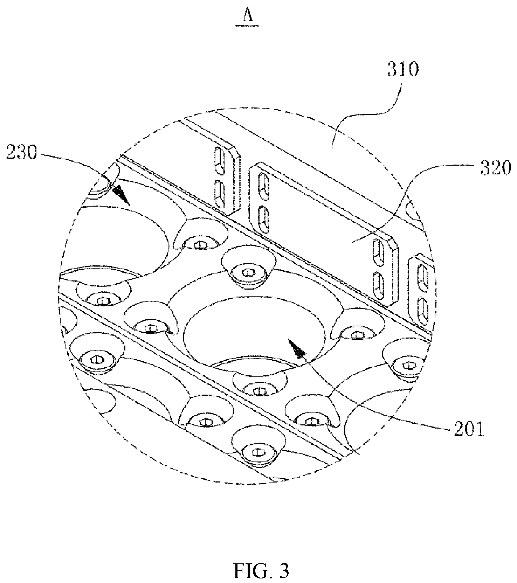

Referring to FIGs. 1 to 5, the embodiments of this application provide a dust extraction apparatus 1000, including a copper nozzle 100, a cover plate 200, a dust extraction assembly 300, and a suction apparatus 500. The copper nozzle 100 is configured to abut against a welding region of a to-be-welded object 2000, where the copper nozzle 100 has a penetrating channel 101. The cover plate 200 is provided with a through hole 201, where the cover plate 200 has a first end face 210 and a second end face 220 opposite each other, the copper nozzle 100 is disposed on the first end face 210, and the channel 101 communicates with the through hole 201. The dust extraction assembly 300 is disposed on the second end face 220, where a cavity 301 having a first port 302 and a second port 303 is formed in the interior of the dust extraction assembly 300, the first port 302 facing the through hole 201. The suction apparatus 500 is connected to the second port 303.

The cover plate 200, as a tooling component for fitting connection, is configured to bear a plurality of components such as the copper nozzle 100 and the dust extraction assembly 300. In addition, the cover plate 200 can be connected in the welding process of the battery production line, for dust extraction operations in the welding process of the battery production line.

Specifically, the cover plate 200 is a plate structure, and therefore the first end face 210 and the second end face 220 of the cover plate 200 refer to two opposite end faces of the cover plate 200 in the thickness direction.

The cover plate 200 is provided with the through hole 201, and the through hole 201 is used to communicate with the channel 101 of the copper nozzle 100. There may be one or more through holes 201, and the through holes 201 may be arranged, for example, in a linear or arcuate manner.

The copper nozzle 100 is configured to abut against the welding region of the to-be-welded object 2000, allowing the channel 101 of the copper nozzle 100 to expose the welding region of the to-be-welded object 2000, such that the welding device for performing welding can penetrate through the through hole 201 and the channel 101 of the copper nozzle 100 and perform the welding operation in the welding region of the to-be-welded object 2000. It can be understood that the welding region of the to-be-welded object 2000 refers to a region in which the to-be-welded object 2000 is specifically subjected to the welding operation. The copper nozzle 100 abuts against the welding region of the to-be-welded object 2000, so as to externally expose the welding region via the channel 101 of the copper nozzle 100, such that an external welding device performs welding operation in the welding region.

When the dust extraction apparatus 1000 is used on the battery production line and performs dust extraction operation on the conductive connection piece during welding, the copper nozzle 100 is configured to abut against the welding region of the conductive connection piece, thus allowing the conductive connection piece to be tightly attached to the electrode of the battery cell.

The copper nozzle 100 is disposed on the first end face 210 of the cover plate 200. Specifically, the copper nozzle 100 may be assembled on the cover plate 200 using a fastener or may be fixedly mounted on the cover plate 200 through clamping or welding.

The channel 101 of the copper nozzle 100 communicates with the through hole 201 of the cover plate 200, such that the welding device can penetrate through the through hole 201 and the channel 101 of the copper nozzle 100 from one side of the second end face 220 of the cover plate 200 and perform welding operation in the welding region of the to-be-welded object 2000. The impurities generated during welding can penetrate through the through hole 201 from the channel 101 of the copper nozzle 100 and then splash towards the second end face 220 of the cover plate 200, and the dust extraction assembly 300 on the second end face 220 can extract the impurities via the first port 302 facing the through hole 201, thus promptly removing the impurities.

Specifically, the dust extraction assembly 300 can include but is not limited to a dust extraction pipe, a dust extraction box, a dust extraction adapter, and the cavity 301 is formed in the interior of the dust extraction assembly 300. It can be understood that one or more independent cavities 301 may be specifically formed in the interior of the dust extraction assembly 300, with each cavity 301 having a first port 302 and a second port 303, where the second port 303 is used to connect the suction apparatus 500, so as to create negative pressure in the cavity 301, and the first port 302 is used to face the through hole 201 for dust extraction operation.

The suction apparatus 500 may be an exhaust fan, a negative pressure apparatus, an induced draft fan, and the like. The suction apparatus 500 is configured to perform the suction operation in the cavity 301 of the dust extraction assembly 300 via the second port 303, so as to create the negative pressure in the cavity 301 of the dust extraction assembly 300, such that the impurities in the through hole 201 are removed through suction via the first port 302 of the dust extraction assembly 300.

In the dust extraction apparatus 1000 provided in the embodiments of this application, the copper nozzle 100 is disposed on the first end face 210 of the cover plate 200, and the dust extraction assembly 300 is disposed on the second end face 220 of the cover plate 200. The copper nozzle 100 tightly presses the to-be-welded object 2000 and exposes the welding region of the to-be-welded object 2000, and the smoke, welding slag, and the like generated during welding in the welding region splash in the channel 101 of the copper nozzle 100, or penetrate through the channel 101 and splash to the second end face 220 of the cover plate 200. The suction apparatus 500 can create negative pressure in the cavity 301 of the dust extraction assembly 300 via the second port 303, and the impurities such as smoke and welding slag in the through hole 201 and the channel 101 of the copper nozzle 100 or on the second end face 220 can be absorbed via the first port 302 into the cavity 301, with the negative pressure formed, in the dust extraction assembly 300, such that they can be exhausted promptly, thus reducing impurities such as smoke and welding slag remaining on the copper nozzle 100 and the second end face 220, reducing the impact of the impurities such as smoke and welding slag on the welding effect to improve it.

Referring to FIGs. 1 to 3, 5, and 6, in some embodiments, the dust extraction assembly 300 includes a dust-extraction tube body 310 and a sealing cover 320, where the dust-extraction tube body 310 is disposed on the second end face 220, the cavity 301 is formed in the interior of the dust-extraction tube body 310, the dust-extraction tube body 310 is provided with an opening 311 and the second port 303, the sealing cover 320 is disposed on the dust-extraction tube body 310, and the sealing cover 320 is configured to seal part of the opening 311, so as to form the first port 302.

It can be understood that the dust-extraction tube body 310 may be but is not limited to a square tube structure and a round tube structure. The dust-extraction tube body 310 may be a straight tube or a curved tube, or may include both a straight tube section and a curved tube section. The dust-extraction tube body 310 may be a metal tube body or an alloy tube body, for example, an aluminum alloy tube body.

The dust-extraction tube body 310 is disposed on the second end face 220. Specifically, the dust-extraction tube body 310 may be assembled on the second end face 220 using a fastener, or the dust-extraction tube body 310 may be fixedly mounted on the second end face 220 through clamping, welding, or the like. After the dust-extraction tube body 310 is assembled on the second end face 220 using a fastener, the dust-extraction tube body 310 may be disassembled by loosening the fastener, thus maintaining the dust-extraction tube body 310 more conveniently or replacing the dust-extraction tube body 310 more quickly.

The cavity 301 is formed in the interior of the dust-extraction tube body 310. Specifically, the cavity 301 may be directly formed in the interior of the dust-extraction tube body 310. The dust-extraction tube body 310 is provided with the opening 311 and the first port 302, the opening 311 and the first port 302 both communicating with the cavity 301. Alternatively, the dust-extraction tube body 310 is provided with an empty groove. When the dust-extraction tube body 310 is assembled on the second end face 220, the second end face 220 can seal part of the empty groove, such that the second end face 220 encloses the empty groove to form the cavity 301, and the part of the empty groove uncovered by the second end face 220 forms the opening 311.

The sealing cover 320 is configured to block part of the opening 311, such that the other part of the opening 311 unblocked forms the first port 302. Specifically, the sealing cover 320 may be but is not limited to a cover piece, the cover plate 200, and a block. The sealing cover 320 may be fixedly mounted on the dust-extraction tube body 310 or movably connected to the dust-extraction tube body 310. When the sealing cover 320 is movably connected to the dust-extraction tube body 310, specifically, the sealing cover 320 may be detachably connected to the dust-extraction tube body 310. When the cavity 301 of the dust-extraction tube body 310 is cleaned and maintained, the sealing cover 320 may be disassembled to completely expose the opening 311, thus more conveniently cleaning and maintaining the inside of the dust-extraction tube body 310.

Through such arrangement, the dust-extraction tube body 310 is disposed on the second end face 220 and the sealing cover 320 is disposed on the dust-extraction tube body 310 and seals part of the opening 311, allowing the other part of the opening 311 to be exposed externally and to form the first port 302 for absorbing impurities such as smoke and welding slag. The suction apparatus 500 can create negative pressure in the cavity 301 of the dust-extraction tube body 310 via the second port 303, thus extracting dust in the through hole 201 via the first port 302. In addition, the suction apparatus 500 is connected to the second port 303 of the dust extraction assembly 300, such that the dust in the through hole 201 and the channel 101 of the copper nozzle 100 can be directly extracted into the cavity 301 of the dust extraction assembly 300 via the first port 302, reducing the use of the air guiding tube, thus reducing the obstruction to airflow caused by the bending and connection of tube, so as to optimize the dust extraction effect by increasing the dust extraction speed.

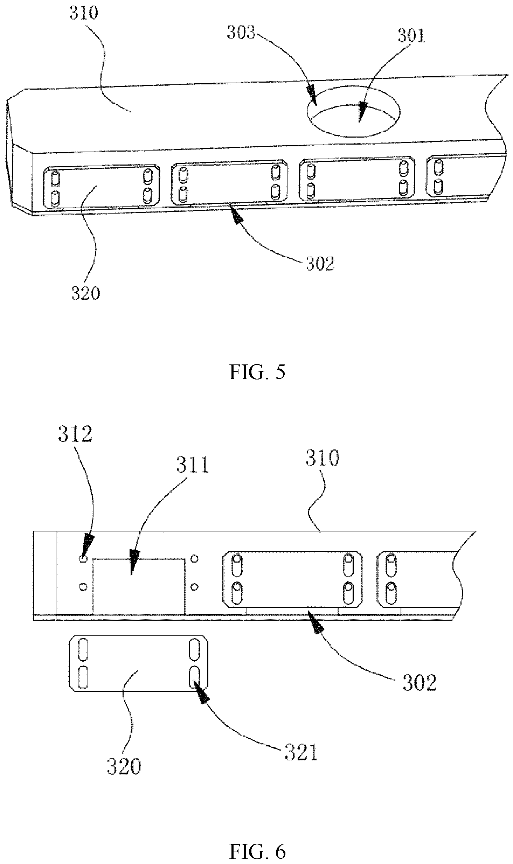

Referring to FIGs. 5 to 7, in some embodiments, one of the dust-extraction tube body 310 and the sealing cover 320 is provided with an adjustment structure 321, and the other one of the dust-extraction tube body 310 and the sealing cover 320 is provided with a connection structure 312, the connection structure 312 being configured to be able to connect to any part of the adjustment structure 321.

Specifically, the adjustment structure 321 can be disposed on the dust-extraction tube body 310, and the connection structure 312 can be disposed on the sealing cover 320. Alternatively, the adjustment structure 321 may be disposed on the sealing cover 320, and the connection structure 312 may be disposed on the dust-extraction tube body 310.

It can be understood that the adjustment structure 321 may be connected to the connection structure 312, and the connection structure 312 may be connected to any part of the adjustment structure 321. That is, the connection position between the connection structure 312 and the adjustment structure 321 can be located at any part of the adjustment structure 321, such that the position of the sealing cover 320 on the dust-extraction tube body 310 can be adjusted and arranged by adjusting the connection position between the adjustment structure 321 and the connection structure 312. This helps to adjust the area of the sealing cover 320 blocking the opening 311, so as to adjust the size of the first port 302, thus improving the dust extraction effect.

The adjustment structure 321 may be a waist-shaped hole, and the connection structure 312 may be a connection hole 431. When the sealing cover 320 is assembled on the dust-extraction tube body 310, the sealing cover 320 can abut against the dust-extraction tube body 310, and the connection hole 431 communicate with the waist-shaped hole. The sealing cover 320 can be assembled on the dust-extraction tube body 310, providing that a fastener is inserted through the waist-shaped hole to be fixedly connected to the connection block. When the connection hole 431 relatively communicates with the waist-shaped hole, the connection hole 431 may be adjusted along the length direction of the waist-shaped hole, so as to properly adjust the relative position between the sealing cover 320 and the dust-extraction tube body 310, and then the fastener is used to complete mounting.

Alternatively, the adjustment structure 321 may further be multiple adjustable round holes, where the multiple adjustable round holes may be arranged along any direction, for example, along the length direction or width direction of the opening 311, and the connection structure 312 may be a connection hole 431. When the sealing cover 320 is assembled on the dust-extraction tube body 310, the sealing cover 320 abuts against the dust-extraction tube body 310, and the connection hole 431 may directly face and communicate with one or more adjustable round holes selected according to the requirements, so as to adjust the position of the sealing cover 320 connected to the dust-extraction tube body 310, and finally the fastener is used to complete mounting.

Alternatively, the adjustment structure 321 and the connection structure 312 may each be a waist-shaped hole or a hole group formed by multiple round holes. Alternatively, one of the adjustment structure 321 and the connection structure 312 may be a waist-shaped hole, and the other may be a hole group formed by multiple round holes.

Through such arrangement, the connection structure 312 being connected to the adjustment structure 321 helps to assemble the sealing cover 320 on the dust-extraction tube body 310. In addition, changing the position of the connection structure 312 connected to the adjustment structure 321 can change the area of the sealing cover 320 blocking the opening 311, adjusting the area of the first port 302, thus improving the dust extraction effect by adjusting the suction volume of the first port 302.

Referring to FIG. 6, in some embodiments, the adjustment structure 321 is a waist-shaped hole, and the connection structure 312 is a mounting hole.

The waist-shaped hole refers to a hole formed by combining semi-circular holes at two ends and a strip-shaped hole in the middle section, and the mounting hole refers to a round hole for the fastener to penetrate through. Specifically, the number of waist-shaped holes and the number of mounting holes are disposed correspondingly. There may be one or more waist-shaped holes, and thus there may correspondingly be one or more mounting holes.

The mounting hole and the waist-shaped hole may be disposed opposite each other and communicate with each other, and the communication position of the mounting hole can be adjusted based on the length direction of the waist-shaped hole, so as to adjust the relative position between the sealing cover 320 and the dust-extraction tube body 310.

Specifically, the waist-shaped hole may be provided in the sealing cover 320, and the mounting hole may be provided in the dust-extraction tube body 310. Alternatively, the waist-shaped hole may be provided in the dust-extraction tube body 310, and the mounting hole may be provided in the sealing cover 320.

Through such arrangement, the mounting hole can be aligned with any part of the waist-shaped hole, and the sealing cover 320 is assembled on the dust-extraction tube body 310 using a fastener, conducive to the mounting and position adjustment of the sealing cover 320, thus adjusting the area of the sealing cover 320 blocking the opening 311, so as to optimize the dust extraction effect by adjusting the size of the first port 302.

For example, in some specific embodiments, the dust-extraction tube body 310 may be a square tube. When the dust-extraction tube body 310 is assembled on the second end face 220, the dust-extraction tube body 310 intersects the second end face 220, and a side tube wall close to the through hole 201 is provided with a rectangular opening 311 with a side edge flush with the second end face 220. The sealing cover 320 may be a rectangular cover piece longer than the opening 311, where the cover piece is provided with a waist-shaped hole with its length direction arranged along the width direction of the cover piece. Multiple waist-shaped holes are provided and respectively provided at two opposite ends of the length direction of the waist-shaped hole. The dust-extraction tube body 310 is provided with a plurality of mounting holes, which are respectively provided on two opposite sides of the dust-extraction tube body 310 along the length direction of the opening 311, and the mounting hole and the waist-shaped hole are disposed correspondingly. During mounting, the cover piece abuts against the dust-extraction tube body 310, allowing the waist-shaped hole of the cover piece to relatively communicate with the corresponding mounting hole of the dust-extraction tube body 310. In this case, the cover piece can cover the part of the opening 311. That is, along the width direction of the opening 311, the open part from a side edge flush with the second end face 220 to an edge of the cover piece forms the first port 302. Then, the cover piece is moved and adjusted along the length direction of the waist-shaped hole, so as to adjust the range of the first port 302, thus optimizing the dust extraction effect. After the adjustment, a bolt is used to penetrate through the waist-shaped hole and the mounting hole and tighten the nut, thus achieving connection between the cover piece and the dust-extraction tube body 310.

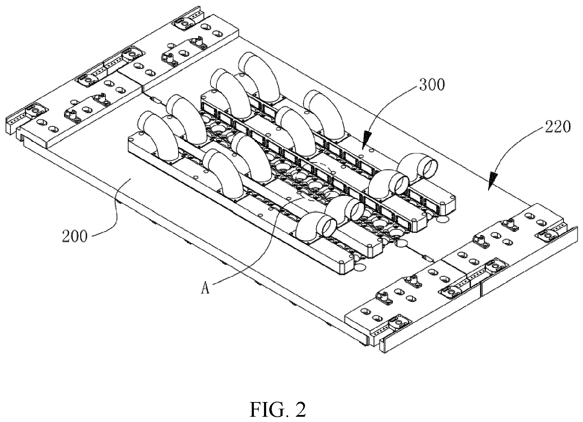

Referring to FIGs. 2 to 5, in some embodiments, the cover plate 200 is provided with a chamfer 230 at a connection position between the through hole 201 and the second end face 220.

It can be understood that the chamfer 230 is obtained by cutting edges and a corner of a workpiece to create an angled surface. Specifically, the chamfer 230 may be a round chamfer 230 or a straight chamfer 230.

Through such arrangement, the suction apparatus 500 connected to the second port 303 creates negative pressure in the cavity 301 of the dust extraction assembly 300, thus allowing dust in the through hole 201 to be extracted into the cavity 301 with the negative pressure via the first port 302. An airflow towards the first port 302 is formed in the through hole 201 and the channel 101 of the copper nozzle 100 due to the negative pressure absorption through the first port 302. With the chamfer 230 provided at the connection position between the second end face 220 and the inner wall of the through hole 201, when flowing out of the through hole 201, the airflow can be guided by the chamfer 230 to more smoothly flow into the first port 302, thus completing dust extraction. The chamfer 230 can improve the flow velocity and rate of the airflow from the channel 101 of the copper nozzle 100 towards the first port 302, thus improving the dust extraction effect in the channel 101 of the copper nozzle 100.

Referring to FIGs. 2 to 5, in some embodiments, the cover plate 200 is provided with a plurality of through holes 201, the copper nozzle 100 is provided in plurality, the plurality of copper nozzles 100 are disposed on the first end face 210 and respectively communicate with corresponding through holes 201; and a plurality of cavities 301 are formed in the interior of the dust extraction assembly 300, and the first ports 302 of the cavities 301 respectively face the corresponding through holes 201.

It can be understood that the cover plate 200 is provided with a plurality of through holes 201, where the plurality of through holes 201 may be sequentially arranged at intervals along any direction; or the plurality of through holes 201 may be sequentially arranged at intervals along any curved line; or the plurality of through holes 201 may be arranged in an array on the cover plate 200. When the plurality of through holes 201 are distributed in an array on the cover plate 200, the dust extraction assembly 300 may include a plurality of dust-extraction tube bodies 310. One dust-extraction tube body 310 is disposed on a side of a column of through holes 201 and the first port 302 of the dust-extraction tube body 310 faces a corresponding one of the column of through holes 201.

The plurality of copper nozzles 100 are provided. Specifically, the copper nozzle 100 and the through hole 201 may be provided in the same quantity, and the channels 101 of the copper nozzles 100 respectively communicate with corresponding through holes 201. Alternatively, the copper nozzles 100 may be fewer than the through holes 201.

The plurality of cavities 301 are formed in the interior of the dust extraction assembly 300. Specifically, one or more cavities 301 may be formed in the interior of the dust extraction assembly 300.

The first ports 302 of the cavities 301 respectively face corresponding through holes 201. Specifically, the cavity 301 has a first port 302, and the first port 302 corresponding to the cavity 301 is used for extracting dust from one through hole 201 and a copper nozzle 100 in communication therewith. Alternatively, the cavity 301 may have a plurality of first ports 302, and dust in the through hole 201 and a copper nozzle 100 in communication therewith can be extracted through the first port 302.

Through such arrangement, as the cover plate 200 is also provided with a plurality of through holes 201 in response to the plurality of copper nozzles 100, the plurality of copper nozzles 100 can communicate with the corresponding through holes 201, such that the welding operation can be performed using a plurality of through holes 201 and channels 101 of the copper nozzles 100 in communication therewith. In addition, the plurality of cavities 301 being formed in the interior of the dust extraction assembly 300, with the first port 302 of each cavity 301 facing a through hole 201, allows one first port 302 to face a corresponding through hole 201 during welding in any copper nozzle 100, such that the dust extraction assembly 300 extracts dust from the copper nozzle 100 in communication with the through hole 201 via the first port 302.

Referring to FIGs. 2 to 5 and 7, in some embodiments, the dust extraction assembly 300 is provided with a plurality of first ports 302, each cavity 301 communicating with at least one first port 302.

It can be understood that when the dust extraction assembly 300 includes the dust-extraction tube body 310, one or more cavities 301 may be formed in the dust-extraction tube body 310, the dust-extraction tube body 310 is provided with one or more first ports 302, and any cavity 301 has at least one first port 302. Specifically, the cavity 301 may have one first port 302 and communicate with the outside through the port. Alternatively, the cavity 301 may have a plurality of first ports 302 and communicates with the outside through the plurality of first ports 302, and the plurality of first ports 302 can respectively face a plurality of through holes 201, allowing dust in the plurality of through holes 201 to be extracted into one cavity 301 through the plurality of first ports 302.

In addition, the cavity 301 has a second port 303, and the second port 303 of the cavity 301 is connected to the suction apparatus 500 to form negative pressure, such that the dust extraction operation in the through hole 201 and the channel 101 of the copper nozzle 100 can be performed through the first port 302.

Through such arrangement, each cavity 301 of the dust extraction assembly 300 can communicate with one or more first ports 302. That is, dust in one or more through holes 201 can be extracted into each cavity 301 via one or more first ports 302.

For example, in some specific embodiments, as the cover plate 200 is provided with the plurality of through holes 201, the plurality of through holes 201 are linearly and sequentially spaced apart on the cover plate 200, and the through hole 201 corresponds to the channel 101 of one copper nozzle 100 and communicates therewith. The dust extraction assembly 300 includes a dust-extraction tube body 310, and the dust-extraction tube body 310 is a square tube structure. A plurality of cavities 301 are formed in the interior of the dust-extraction tube body 310, and the cavity 301 has one second port 303 and a plurality of first ports 302. The dust-extraction tube body 310 is assembled on the cover plate 200, and the length direction of the dust-extraction tube body 310 is arranged along the distribution direction of the plurality of through holes 201. A spacing between adjacent first ports 302 is consistent with the spacing between adjacent through holes 201, such that the first port 302 of the dust-extraction tube body 310 faces a corresponding through hole 201. The suction apparatus 500 is connected to the second port 303 of the cavity 301 of the dust-extraction tube body 310, such that dust in the through hole 201 and the channel 101 of the copper nozzle 100 in communication therewith can be extracted through the plurality of first ports 302 of the cavity 301, the first port 302 facing the through hole 201.

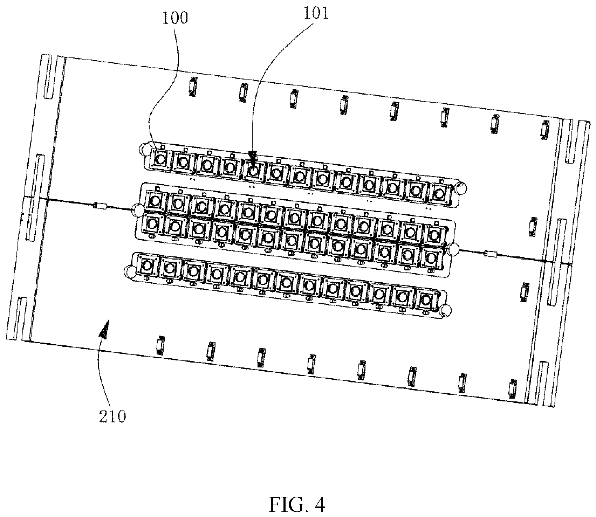

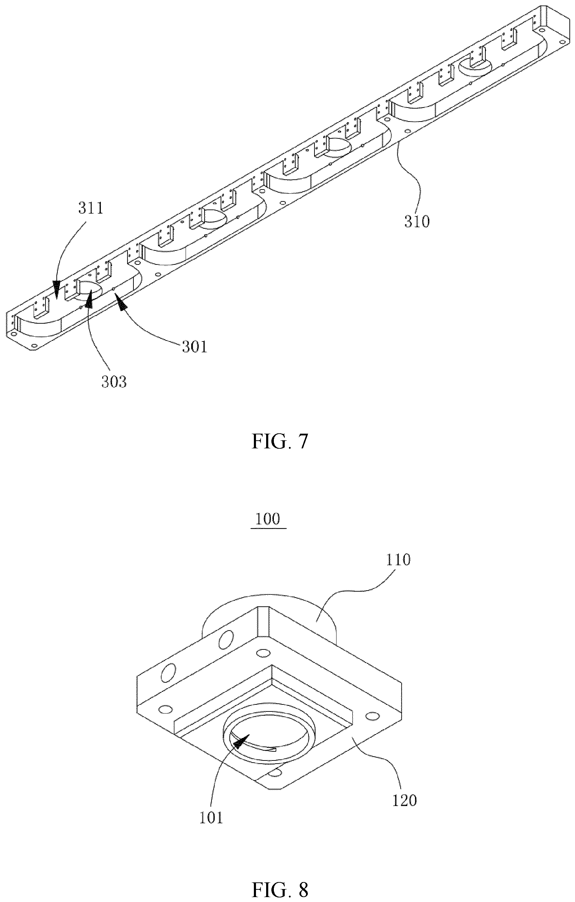

Referring to FIGs. 4 and 8, in some embodiments, the copper nozzle 100 includes a copper nozzle body 110 and a mounting portion 120, where the copper nozzle body 110 is provided with the channel 101, the mounting portion 120 is connected to the copper nozzle body 110, and the mounting portion 120 is disposed on the first end face 210.

The copper nozzle body 110 may be a copper tube section, and a hollow channel 101 is formed in the interior of the copper tube section. The mounting portion 120 may be but is not limited to a mounting block, a mounting bracket, a mounting rod, and a mounting plate. The mounting portion 120 may be disposed on the outer wall of the copper nozzle body 110, and the copper nozzle body 110 may be integrated with the mounting portion 120. Alternatively, the copper nozzle body 110 may be fixed to the mounting portion 120 through bolting, clamping, welding, or the like,

The mounting portion 120 may be assembled on the first end face 210 of the cover plate 200 using a fastener or fixed to the first end face 210 through clamping, welding, or the like.

For example, in some specific embodiments, the copper nozzle 100 includes a rectangular block-shaped mounting base and a copper tube section arranged in the middle of the mounting base and integrated with the mounting base. The mounting base is provided with a plurality of lock holes, and the cover plate 200 is provided with fixing holes corresponding to the lock holes, where the fixing holes may be arranged around a corresponding through hole 201. The mounting base abuts against the first end face 210, the channel 101 of the copper tube section communicates with the through hole 201, and the lock hole communicates with the corresponding fixing hole. A fastener is used to sequentially penetrate through the lock hole and the fixing hole, so as to fix and assemble the mounting base on the first end face 210 and allow for communication between the channel 101 and the through hole 201. It can be understood that compared with the manner of fixing the mounting base to the first end face 210 using the fastener, the manner of directly welding the copper nozzle 100 to the first end face 210 shows stronger stability, such that the copper nozzle 100 presses the to-be-welded object 2000 more tightly, and the pressed welded object is less subjected to the risk of welding seam collapse during welding, thus improving the welding effect.

Referring to FIGs. 1, 2, and 5, in some embodiments, the dust extraction apparatus 1000 further includes a control assembly 400, the control assembly 400 is disposed on the cover plate 200, and the control assembly 400 is configured to be able to control unblocking/blocking of the second port 303.

It can be understood that the control assembly 400 is configured to control the unblocking/blocking of the second port 303. When the control assembly 400 controls the second port 303 to be unblocked, the suction apparatus 500 can create negative pressure in the cavity 301 through the second port 303, such that dust in the through hole 201 can be extracted through the first port 302. When the control assembly 400 controls the second port 303 to be blocked, the suction apparatus 500 does not communicate with the first port 302.

Specifically, the control assembly 400 may include a drive structure and a blocking structure, where the drive structure is configured to drive the blocking structure to move, so as to block or unblock the second port 303. Alternatively, the control assembly 400 may further include a manually-adjusted structure 321, where the manually-adjusted structure 321 may be movably disposed on the dust extraction assembly 300, such that the second port 303 is blocked or unblocked through manual adjustment.

It should be understood that when the dust extraction assembly 300 has a plurality of cavities 301, that is, the dust extraction assembly 300 has a plurality of second ports 303, there should be a plurality of control assemblies 400, where the control assemblies 400 respectively control the unblocking/blocking of the corresponding second ports 303.

Through such arrangement, the control assembly 400 can control the unblocking/blocking of the second port 303. When the dust extraction assembly 300 has a plurality of cavities 301, the control assembly 400 can be used to unblock the second port 303 of the cavity 301 required for dust extraction and to block the second port 303 of the cavity 301 required for no dust extraction, so as to adjust the increase in negative pressure of the cavity 301 required for dust extraction, thus improving the dust extraction effect of the first port 302.

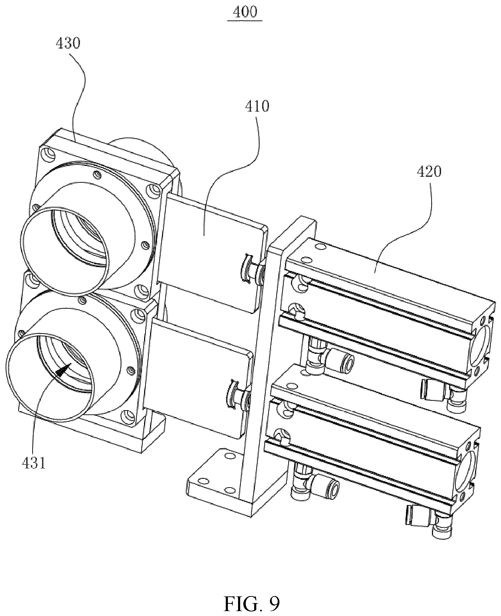

Referring to FIGs. 1, 5, and 9, in some embodiments, the control assembly 400 includes a blocking member 410 and a drive member 420, where an output end of the drive member 420 is connected to the blocking member 410, and the drive member 420 is configured to drive the blocking member 410 to move, so as to unblock or block the second port 303.

The blocking member 410 may be but is not limited to a blocking block, a blocking ball, and a blocking plate. The blocking member 410 may be disposed on the dust extraction assembly 300 and driven by the drive member 420 to move so as to block the second port 303, or move out of the second port 303. Alternatively, the blocking member 410 may be disposed between the second port 303 of the dust extraction assembly 300 and the suction apparatus 500 and driven by the drive member 420 to move so as to disconnect or connect a tube connecting the second port 303 to the suction apparatus 500.

The drive member 420 may be but is not limited to a drive cylinder, a drive hydraulic cylinder, and a drive motor. The drive member 420 may be fixed using a mounting structure provided externally or may be fixedly mounted on the cover plate 200.

Through such arrangement, the drive member 420 is used to drive the blocking member 410 to move, such that the blocking member 410 can move to block or unblock the second port 303, so as to control the unblocking/blocking the second port 303.

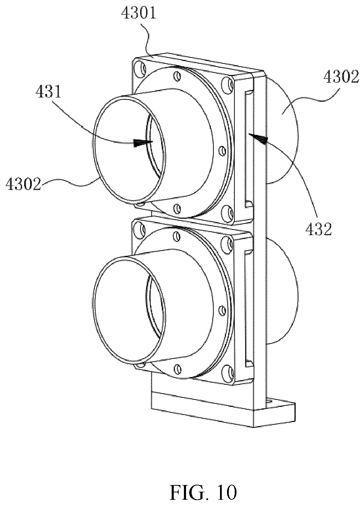

Referring to FIG. 1, 9, and 10, in some embodiments, the control assembly 400 further includes a connection member 430, where the connection member 430 is provided with a connection hole 431 and an insertion slot 432, the connection hole 431 communicates with the second port 303, the second port 303 communicates with the suction apparatus 500 via the connection hole 431, and the insertion slot 432 intersects the connection hole 431; and the blocking member 410 is a flipper, and the drive member 420 is configured to drive the flipper to move until the flipper is inserted into the insertion slot 432 and blocks the connection hole 431.

The connection members 430 may be but are not limited to a connection joint, a connection block, and a connection bracket. The connection member 430 may be fixedly assembled using a fixing structure provided externally or may be assembled on the cover plate 200 using a mounting bracket.

The connection hole 431 provided in the connection member 430 intersects the insertion slot 432, that is, the depth direction of the insertion slot 432 intersects the depth direction of the connection hole 431. When the flipper moves to be inserted into the insertion slot 432, the flipper can isolate the connection hole 431 along a depth direction intersecting the connection hole 431, so as to block the connection hole 431, thus blocking the second port 303.

For example, description is made using an example in which the connection member 430 is a connection joint. The connection joint includes a joint base 4301 and two joint tubes 4302 sealingly connected to two opposite side surfaces of the joint base 4301. The joint base 4301 is provided with a connection hole 431 to allow for communication between two joint tubes 4302, and the joint base 4301 is further provided with an insertion slot 432, the depth direction of the insertion slot 432 being perpendicular to the depth direction of the connection hole 431. It should be understood that the suction apparatus 500 can be connected to the second port 303 of the dust extraction assembly 300 via the channel, and therefore, the connection joint may be disposed on the channel between the suction apparatus 500 and the second port 303. Of the connection joint, one joint tube 4302 is connected to the suction apparatus 500 via the channel, and the other joint tube 4302 is connected to the second port 303 via the channel. The drive member 420 may be a drive cylinder, the piston of the drive cylinder is connected to the flipper, the flipper is driven to be inserted into the insertion slot 432, and the flipper can block the connection hole 431, so as to block the connector tubes 4302 on two sides, thus blocking the second port 303.

The flipper may be but is not limited to a round flipper and a rectangular flipper. It can be understood that the area of the flipper is greater than or equal to the cross-section area of the connection hole 431, thus completely blocking the connection hole 431 when the flipper is inserted into the insertion slot 432.

Through such arrangement, the drive member 420 can drive the flipper to block the connection hole 431, such that the flipper blocks the second port 303 from the suction apparatus 500 at the connection hole 431, thus blocking the second port 303.

For example, in some specific implementations, the cover plate 200 is provided with a plurality of through holes 201, the first end face 210 of the cover plate 200 is assembled with a plurality of copper nozzles 100, the mounting portion 120 of the copper nozzle 100 is fixedly connected to the second end face 220 using a fastener, and the channel 101 on the copper nozzle body 110 of the copper nozzle 100 communicates with a corresponding through hole 201. The plurality of through holes 201 are distributed in the cover plate 200 and form multiple rows of hole groups, and at least one dust-extraction tube body 310 is disposed on at least one side of each row of hole groups along the distribution direction of the second end face 220. The dust-extraction tube body 310 is assembled on the cover plate 200 using a fastener, and the cover piece is assembled on the dust-extraction tube body 310 using a fastener and covers part of the opening 311, allowing the other part of the opening 311 exposed externally to form the second port 303 facing a corresponding through hole 201. The second port 303 can be connected to one joint tube 4302 of the connection member 430 via the channel, and the other joint tube 4302 of the connection member 430 is connected to the suction apparatus 500 via the channel. The drive cylinder drives the flipper to be inserted into the insertion slot 432 of the joint base 4301 to block the connection hole 431, so as to block the opening 311.

Referring to FIG. 1, the embodiments of this application further provide a battery production line 10 including the foregoing dust extraction apparatus 1000.

As the battery production line 10 provided in the embodiments of this application includes the foregoing dust extraction apparatus 1000, on the basis that the dust extraction apparatus 1000 can promptly exhaust impurities such as smoke and welding slag to reduce their impact on the welding effect, the products processed and assembled on the battery production line 10 show better quality.

The foregoing descriptions are merely preferable embodiments of this application but are not intended to limit this application. Any modification, equivalent replacement, or improvement made without departing from the spirit and principle of this application shall fall within the protection scope of this application.

## Claims

1. A dust extraction apparatus, **characterized by** comprising:
a copper nozzle configured to abut against a welding region of a to-be-welded object, wherein the copper nozzle has a penetrating channel;
a cover plate provided with a through hole, wherein the cover plate has a first end face and a second end face opposite each other, the copper nozzle is disposed on the first end face, and the channel communicates with the through hole;
a dust extraction assembly disposed on the second end face, wherein a cavity having a first port and a second port is formed in the interior of the dust extraction assembly, the first port facing the through hole; and
a suction apparatus connected to the second port.

2. The dust extraction apparatus according to claim 1, **characterized in that** the dust extraction assembly comprises a dust-extraction tube body and a sealing cover, wherein the dust-extraction tube body is disposed on the second end face, the cavity is formed in the interior of the dust-extraction tube body, the dust-extraction tube body is provided with an opening and the second port, the sealing cover is disposed on the dust-extraction tube body, and the sealing cover is configured to seal part of the opening so as to form the first port.

3. The dust extraction apparatus according to claim 2, **characterized in that** one of the dust-extraction tube body and the sealing cover is provided with an adjustment structure, and the other one of the dust-extraction tube body and the sealing cover is provided with a connection structure, the connection structure being configured to be able to connect to any part of the adjustment structure.

4. The dust extraction apparatus according to claim 3, **characterized in that** the adjustment structure is a waist-shaped hole, and the connection structure is a mounting hole.

5. The dust extraction apparatus according to any one of claims 1 to 4, **characterized in that** the cover plate is provided with a chamfer at a connection position between the through hole and the second end face.

6. The dust extraction apparatus according to any one of claims 1 to 5, **characterized in that** the cover plate is provided with a plurality of such through holes, the copper nozzle is provided in plurality, the plurality of copper nozzles are disposed on the first end face and respectively communicate with corresponding through holes; and a plurality of such cavities are formed in the interior of the dust extraction assembly, and the first ports of the cavities respectively face the corresponding through holes.

7. The dust extraction apparatus according to claim 6, **characterized in that** the dust extraction assembly is provided with a plurality of such first ports, and each of the cavities communicates with at least one of the first ports.

8. The dust extraction apparatus according to any one of claims 1 to 7, **characterized in that** the copper nozzle comprises a copper nozzle body and a mounting portion, wherein the copper nozzle body is provided with the channel, the mounting portion is connected to the copper nozzle body, and the mounting portion is disposed on the first end face.

9. The dust extraction apparatus according to any one of claims 1 to 8, **characterized in that** the dust extraction apparatus further comprises a control assembly, the control assembly is disposed on the cover plate, and the control assembly is configured to be able to control unblocking/blocking of the second port.

10. The dust extraction apparatus according to claim 9, **characterized in that** the control assembly comprises:
a blocking member; and
a drive member, wherein an output end of the drive member is connected to the blocking member, and the drive member is configured to drive the blocking member to move to unblock or block the second port.

11. The dust extraction apparatus according to claim 10, **characterized in that** the control assembly further comprises a connection member, wherein the connection member is provided with a connection hole and an insertion slot, the connection hole communicates with the second port, the second port communicates with the suction apparatus via the connection hole, and the insertion slot intersects the connection hole; and
the blocking member is a flipper, and the drive member is configured to drive the flipper to move until the flipper is inserted into the insertion slot and blocks the connection hole.

12. A battery production line, **characterized by** comprising the dust extraction apparatus according to claim 11.
